# EUROPEAN PATENT SPECIFICATION

(11) **EP 4 333 176 B1**
(45) Date of publication and mention of the grant of the patent: **12.02.2025**
(21) Application number: 23185109.8
(22) Date of filing: 12.07.2023
(51) Int. Cl.: H01M 50/209, H01M 50/262, H01M 50/258

(54) **HOUSEHOLD ENERGY STORAGE SYSTEM AND MODULE FIXING STRUCTURE THEREOF**
HAUSHALTSENERGIESPEICHERSYSTEM UND MODULBEFESTIGUNGSSTRUKTUR DAFÜR
SYSTÈME DE STOCKAGE D'ÉNERGIE DOMESTIQUE ET STRUCTURE DE FIXATION DE MODULE ASSOCIÉE

(30) Priority: 24.08.2022 CN 202222241717 U
(43) Date of publication of application: 06.03.2024
(73) Proprietor: Sungrow Energy Storage Technology Co., Ltd., Hefei, Anhui 230088 (CN)
(72) Inventor: SHI, Xiang, Hefei (CN); HUANG, Shuqiang, Hefei (CN)
(74) Representative: Zacco Norway AS

(56) References cited:
- EP-A1- 3 958 372
- CN-U- 215 644 823

## Description

### FIELD

The present application relates to the field of energy storage technology, and in particular to a household energy storage system and a module fixing structure thereof.

### BACKGROUND

With the development of energy storage technology in the renewable energy industry, household energy storage systems are gradually being promoted and applied. The stacked modular design is usually used in the above household energy storage systems. The modular design is implemented as dividing the entire household energy storage system into multiple modules based on functions, while the stacked modular design is implemented as sequentially stacking the multiple modules in a height direction from bottom to top.

As the height of the stacked modules increases, the modules generally are required to be fixed in order to ensure the stability of the system. However, the conventional fixing manners are complex, which is not convenient for installation and maintenance.

In view of the above, the technical problem to be solved by those skilled in the art is how to fix the modules to improve the convenience of installation and maintenance.

### SUMMARY

In view of this, the object of the present application is to provide a household energy storage system and a module fixing structure thereof, to improve the convenience of installation and maintenance.

In order to realize the above object, the following technical solutions are provided according to the present application.

A module fixing structure of a household energy storage system includes:
multiple modules and at least one first fixing member; where
the multiple modules are stacked in at least one stacking direction;
in the stacking direction in which N modules of the multiple modules are stacked, the first fixing member stretches across M modules of the multiple modules, only two ends of the first fixing member are fixed to two of the multiple modules, respectively, and the M modules are located between the two ends of the first fixing member and are not fixedly connected to the first fixing member; where
N is a positive integer greater than or equal to 3, and M is a positive integer less than or equal to N-2.

In an embodiment, the number of the first fixing member is at least two; and
the at least two first fixing members stretch across a same number of modules; and/or, the at least two first fixing members stretch across different numbers of modules.

In an embodiment, the stacking direction in which the N modules are stacked is a vertical direction and/or a horizontal direction.

In an embodiment, each of the multiple modules is of a rectangular cuboid shape, the vertical direction is a height direction of the modules, and the horizontal direction is a length direction and/or a width direction of the modules.

In an embodiment, two adjacent modules of the multiple modules fit with each other by positioning in the stacking direction.

In an embodiment, in the stacking direction, one of the two adjacent modules is provided with at least one positioning groove, the other of the two adjacent modules is provided with at least one positioning member, and the positioning member and the positioning groove fit with each other by positioning.

In an embodiment, the number of the at least one positioning member is two or more, and the number of the at least one positioning groove is two or more; at least one of the two or more positioning members is a first positioning member, at least one of the two or more positioning grooves is a first positioning groove, and the first positioning member and the first positioning groove fit with each other by positioning;
at least another one of the two or more positioning members is a second positioning member, at least another one of the two or more positioning grooves is a second positioning groove, and the second positioning member and the second positioning groove fit with each other by positioning; and
a fit accuracy between the first positioning member and the first positioning groove is less than that between the second positioning member and the second positioning groove.

In an embodiment, the stacking direction is a vertical direction, the first positioning member is a handle, the first positioning groove is a handle groove, the handle is arranged at a top of the other of the two adjacent modules, and the handle groove is arranged at a bottom of the one of the two adjacent modules; and
the second positioning member is a positioning rod, and the second positioning groove is a positioning rod groove.

In an embodiment, the first fixing member is fixedly connected to the modules in a detachable manner.

In an embodiment, the module is provided with a first mounting notch, the first mounting notch and the first fixing member fit with each other by positioning and/or the first fixing member and the modules on which the first fixing member is located are flush with each other, and the first fixing member is fixed at the first mounting notch.

In an embodiment, in a case that the first fixing member and the modules on which the first fixing member is located are flush with each other, at least one of the modules is provided with a first flange in a circumferential direction, the first flange has a first flange notch; and the first fixing member includes a first fixing plate and a first protruding portion provided on the first fixing plate;
where the first fixing plate is fixed at the first mounting notch, and the first fixing plate and the modules on which the first fixing member is located are flush with each other; the first protruding portion is arranged at the first flange notch, and the first protruding portion and the first flange are flush with each other and abutted to each other to form a closed loop structure.

In an embodiment, the module fixing structure further includes a second fixing member, where the second fixing member is used to fixedly connect two adjacent modules of the multiple modules in the stacking direction.

In an embodiment, each of the two adjacent modules of the multiple modules is provided with a second mounting notch, the second mounting notch and the second fixing member fit with each other by positioning, and/or the second fixing member and the two adjacent modules to which the second fixing member is connected are flush with each other; and the second fixing member is fixed at the second mounting notch.

In an embodiment, in a case that the second fixing member and the two adjacent modules to which the second fixing member is connected are flush with each other, at least one of the two adjacent modules is provided with a second flange in a circumferential direction, the second flange has a second flange notch; and the second fixing member includes a second fixing plate and a second protruding portion provided on the second fixing plate;
where the second fixing plate is fixed at the second mounting notch, and the second fixing plate and the two adjacent modules to which the second fixing plate is connected are flush with each other; the second protruding portion is arranged at the second flange notch, and the second protruding portion and the second flange at which the second protruding portion is arranged are flush with each other and abutted to each other to form a closed loop structure.

In an embodiment, at least two of the modules are functional modules and at least one of the modules is a structural module; or, at least one of the modules is a functional module and at least two of the modules are structural modules; or, each of the modules is a functional module; and
where the functional module is an energy storage module, a power control module, an inverter module, a photovoltaic power generation module or a heat dissipation module, and the structural module is a base or a top cover.

On the basis of the above module fixing structure, a household energy storage system is further provided according to the present application. The household energy storage system includes the module fixing structure according to any one of the above embodiments.

In the module fixing structure of a household energy storage system according to the present application, the modules are stacked in at least one stacking direction, the first fixing member stretches across M modules in the stacking direction in which N modules are stacked, and only two ends of the first fixing member are fixed to two of the modules, respectively, N is a positive integer greater than or equal to 3, and M is a positive integer less than or equal to N-2. In this way, only two of the stacked N modules are required to be fixedly connected to the same first fixing member, and the M modules are not fixedly connected to the first fixing member, which reduces the number of fixed connections. Accordingly, the first fixing member stretches across the M modules in the stacking direction in which N modules are stacked, which effectively reduces the number of the first fixing member and the number of fixed connections. Therefore, with the above module fixing structure, the convenience of installation and maintenance is improved.

### BRIEF DESCRIPTION OF THE DRAWINGS

For more clearly illustrating the technical solutions in the embodiments of the present application or in the conventional technology, the accompanying drawings used in the description of the embodiments or the conventional technology will be briefly described hereinafter. Apparently, the accompanying drawings described hereafter illustrate only embodiments of the present application, and other drawings can be obtained by those skilled in the art based on the provided drawings without any creative efforts.
FIG. 1 is a schematic view showing the structure of a module fixing structure in the conventional technology;
FIG. 2 is a schematic view showing the structure of a module fixing structure of a household energy storage system according to a first embodiment of the present application;
FIG. 3 is schematic view showing another structure of the module fixing structure of the household energy storage system according to the first embodiment of the present application;
FIG. 4 is a front view of the structure shown in FIG. 3;
FIG. 5 is a side view of the structure shown in FIG. 3;
FIG. 6 is a schematic view showing the structure of a functional module in FIG. 3;
FIG. 7 is a bottom view of the structure shown in FIG. 6;
FIG. 8 is a schematic view showing the structure of a first fixing member in FIG. 3;
FIG. 9 is a schematic view showing the structure of a second fixing member in FIG. 3;
FIG. 10 is a schematic view showing the structure of a module fixing structure of a household energy storage system according to a second embodiment of the present application;
FIG. 11 is a schematic view showing the structure of a module fixing structure of a household energy storage system according to a third embodiment of the present application; and
FIG. 12 is a schematic view showing the structure of a module fixing structure of a household energy storage system according to a fourth embodiment of the present application.

**Reference numerals:**

| | | | |
|---|---|---|---|
| 01 | fixing member; | 02 | module; |
| 1 | first fixing member; | 2 | second fixing member; |
| 3 | module; | 4 | first positioning member; |
| 5 | second positioning member; | 6 | first positioning groove; |
| 7 | second positioning groove; | 11 | first fixing plate; |
| 12 | first protruding portion; | 13 | first fixing hole; |
| 111 | fixing portion; | 112 | stretching-across portion; |
| 21 | second fixing plate; | 22 | second protruding portion; |
| 23 | second fixing hole; | 3a | base; |
| 3b | functional module; | 3c | top cover; |
| 31 | first mounting notch; | 32 | first mounting boss; |
| 33 | first flange; | 34 | first flange notch. |

### DETAILED DESCRIPTION OF THE EMBODIMENTS

The technical solutions in the embodiments of the present application are clearly and completely described below in conjunction with the accompanying drawings. Apparently, the described embodiments are only a part of the embodiments of the present application, not all of them. Based on the embodiments in the present application, other embodiments obtained by those skilled in the art without creative efforts fall within the protection scope of the present application.

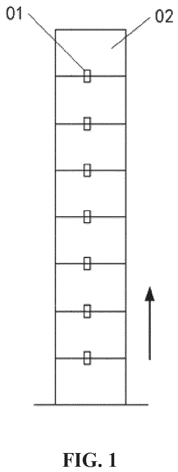

As shown in FIG. 1, in the conventional household energy storage system, eight modules 02 are stacked in sequence in a vertical direction, where the vertical direction is shown by the arrow in FIG. 1.

Two adjacent modules 02 are fixedly connected through a fixing member 01. Specifically, one of the two adjacent modules 02 is fixedly connected to one end of the fixing member 01 and the other of the two adjacent modules 02 is fixedly connected to the other end of the fixing member 01.

In the above fixing structure, seven fixing members 01 are required, i.e. seven fixing connections are performed, which does not facilitate installation and maintenance.

In addition, the household energy storage system is usually installed by a third party or by the customer, and the above fixing structure increases the complexity of on-site installation and on-site maintenance.

In order to facilitate installation and maintenance, a module fixing structure of a household energy storage system is provided according to embodiments of the present application.

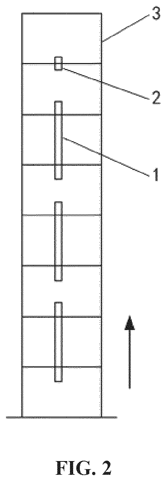

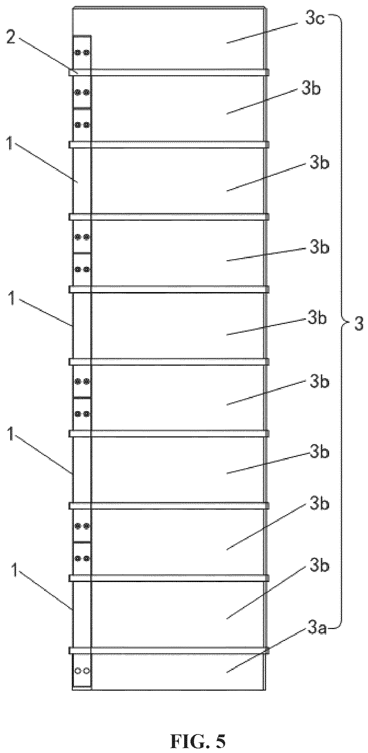

Specifically, as shown in FIGS. 2, 3, 5 and 10 to 12, the module fixing structure according to the present embodiment includes multiple modules 3 and at least one first fixing member 1. The modules 3 are stacked in at least one stacking direction; the first fixing member 1 stretches across M modules 3 of the modules 3 in a stacking direction in which N modules 3 are stacked, and only two ends of the first fixing member 1 are fixed to two of the multiple modules 3, respectively. N is a positive integer greater than or equal to 3, and M is a positive integer less than or equal to N-2.

It should be noted that multiple or a plurality of refers to three or more. In the stacking direction in which the N modules 3 are stacked, one end of the first fixing member 1 is fixed to one module 3 of the N modules, and the other end of the first fixing member 1 is fixed to another module 3 of the N modules; and the M modules are located between the two ends of the first fixing member 1.

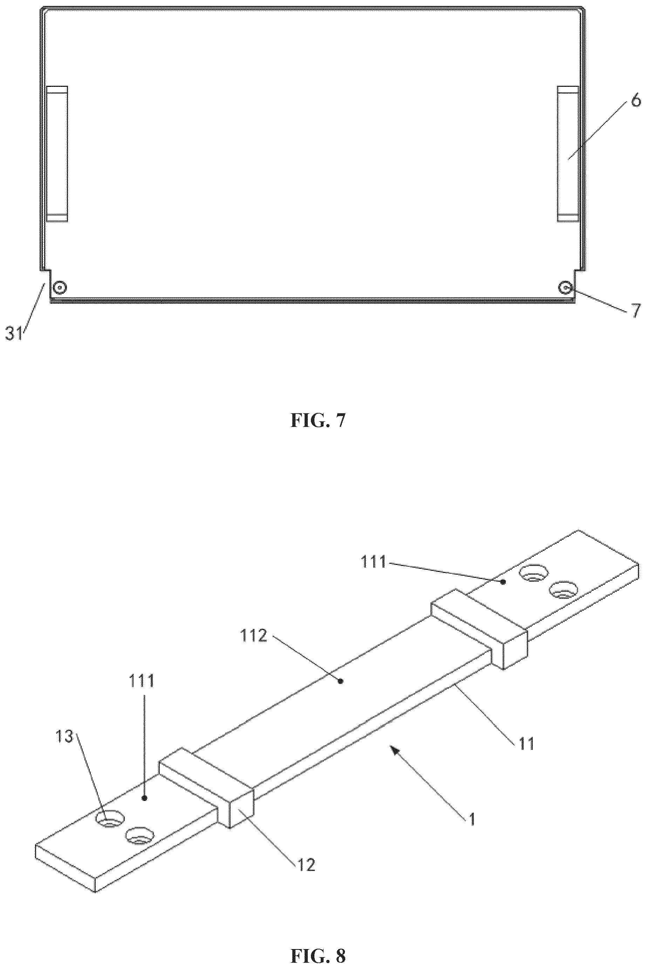

As shown in FIG. 8, the first fixing member 1 includes two fixing portions 111 and a stretching-across portion 112 located between the two fixing portions 111. One fixing portion 111 is fixedly connected to one end of the stretching-across portion 112, and the other fixing portion 111 is fixedly connected to the other end of the stretching-across portion 112, and the fixing portion 111 is fixedly connected to the corresponding module 3.

The first fixing member 1 may be a one-piece structure or a split structure, depending on the actual needs.

In the above module fixing structure of a household energy storage system, only two modules 3 of the stacked N modules 3 are required to be fixedly connected to the same first fixing member 1, and the M modules 3 are not fixedly connected to the first fixing member 1, which reduces the number of fixed connections. Accordingly, the first fixing member 1 stretches across the M modules 3 in the stacking direction in which N modules 3 are stacked, which effectively reduces the number of the first fixing member 1 and the number of fixed connections. Therefore, with the above module fixing structure, the convenience of installation and maintenance is improved.

It will be understood that the greater the number of modules 3 across which the first fixing member 1 stretches, the greater the number of fixed connections is reduced by.

In the above module fixing structure, the number of the first fixing member 1 may be one, or two or more. In a case that the number of the first fixing member 1 is at least two, the at least two first fixing members 1 may stretch across the same number of modules 3, and/or, the at least two first fixing members 1 may stretch across different numbers of modules 3.

In the above embodiments, the number of modules 3 across which each of first fixing members 1 stretches is selected according to actual needs, so that the form of fixing can be varied according to the actual situation without changing the number of fixing connections, which improves flexibility and further improves the convenience of installation and maintenance, thereby improving adaptability to complex installation environments.

The above stacking direction may be one, or two or more, depending on the actual needs. The specific direction of the above stacking direction is also selected according to actual needs. Specifically, the stacking direction is a vertical direction and/or a horizontal direction. It is understood that the horizontal direction is perpendicular to the vertical direction.

Accordingly, the stacking direction in which N modules 3 are stacked is a vertical direction and/or a horizontal direction.

The above modules 3 are usually of a rectangular cuboid shape, the above vertical direction is a height direction of the modules 3, and the above horizontal direction is a length direction and/or a width direction of the modules 3.

Specifically, the stacking direction in which N modules 3 are stacked is the height direction of the modules 3, and/or the length direction of the modules 3, and/or the width direction of the modules 3.

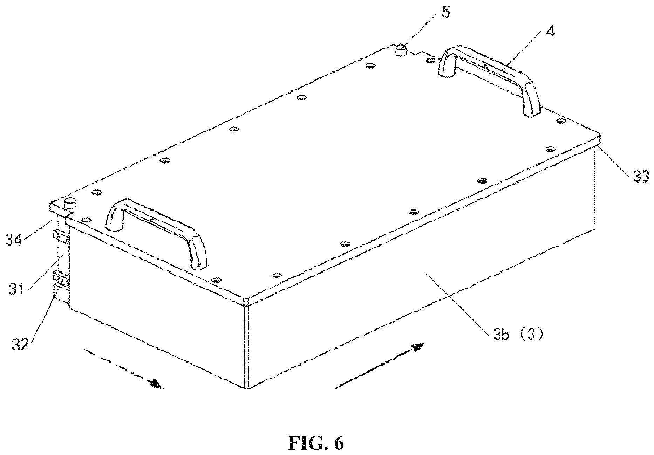

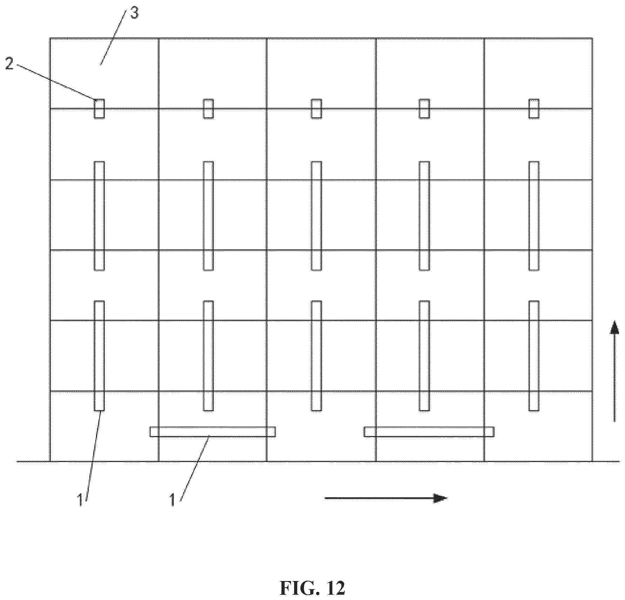

The arrow lines shown in FIGS. 2, 3, 10 and 11 indicate the vertical direction, the solid arrow line in FIG. 6 indicates the length direction of the modules 3, the dashed arrow line in FIG. 6 indicates the width direction of the modules 3, the horizontal arrow line in FIG. 12 indicates the horizontal direction, and the vertical arrow line in FIG. 12 indicates the vertical direction.

To facilitate stacking and fixing, two adjacent modules 3 fit with each other by positioning in the stacking direction. The specific structure of the fitting and positioning of the two modules 3 is selected according to actual needs. Specifically, in the stacking direction, one of the two adjacent modules 3 is provided with at least one positioning groove, the other of the two adjacent modules 3 is provided with at least one positioning member, and the positioning member and the positioning groove fit with each other by positioning.

The specific structure and the specific number of the above positioning member and the positioning groove may be selected according to actual needs, which are not limited in the embodiment.

As shown in FIG. 6 and 7, in order to improve the positioning effect, two or more positioning members and two or more positioning grooves are provided; where at least one of the positioning members is a first positioning member 4, at least one of the positioning grooves is a first positioning groove 6, and the first positioning member 4 and the first positioning groove 6 fit with each other by positioning; at least another one of the positioning members is a second positioning member 5, at least another one of the positioning grooves is a second positioning groove 7, and the second positioning member 5 and the second positioning groove 7 fit with each other by positioning. A fit accuracy between the first positioning member 4 and the first positioning groove 6 is less than that between the second positioning member 5 and the second positioning groove 7.

In the above structure, coarse positioning (i.e., primary positioning) is realized by the first positioning member 4 and the first positioning groove 6, and fine positioning (i.e., secondary positioning) is realized by the second positioning member 5 and the second positioning groove 7. In this way, when the first fixing member 1 is used for fixing in a stretching-across manner, the installation difficulties between the modules 3 due to manufacturing and installation errors can be effectively reduced.

Generally, the modules 3 each is provided with a handle. If the stacking direction is the vertical direction, as shown in FIGS. 6 and 7, the first positioning member 4 is embodied as the handle and the first positioning groove 6 may be a handle groove, where the handle is located at a top of the module 3 having the handle and the handle groove is located at a bottom of the module 3 having the handle groove. In this way, coarse positioning can be realized by the handle and the handle groove, which makes full use of the handle structure of the module 3 itself, and thereby the structure is simplified.

In actual application, alternatively, coarse positioning can be realized by means of other positioning structures, which are not limited to the above embodiments.

In order to facilitate improving the fit accuracy, the second positioning member 5 may be a positioning rod and the second positioning groove 7 may be a positioning rod groove.

In actual application, other positioning structures, such as mortise and tenon joint, may also be used to improve the fit accuracy, which are not limited to the above embodiments.

The specific number and distribution of the first positioning member 4 and the second positioning member 5 are determined according to actual needs. As shown in FIG. 6, for example, the first positioning member 4 is a handle, the module 3 is of a rectangular cuboid shape, and the number of the handle on the module 3 is two and the two handles are distributed in sequence in the length direction of the module 3, and the length direction of the handles parallel to the width direction of the module 3. For example, the second positioning member 5 is a positioning rod, the module 3 is of a rectangular cuboid shape, and the number of the positioning rod is at least two and the at least two positioning rods are distributed in sequence in the length direction, width direction or diagonal direction of the module 3.

To facilitate maintenance of the module 3, the first fixing member 1 may be fixedly connected to the module 3 in a detachable manner. Optionally, the first fixing member 1 and the module 3 are fixedly connected through a threaded connecting member, so that the structure is simple and the fixing is reliable.

Specifically, the first fixing member 1 and module 3 are fixedly connected through screws. As shown in FIG. 8, the first fixing member 1 is provided with first fixing holes 13 for the screws to pass through, and each of the first fixing holes 13 is a countersunk hole. In this way, the screws can be hidden and the appearance is improved.

In actual application, the structure for fixing the first fixing member 1 and the module 3 is not limited to the above way, and the first fixing member 1 may be fixed to the modules 3 by using one of manners or a combination of at least two of the manners of a binding member, a snap-on structure and a clamping member.

The specific structures of the first fixing member 1 and the modules 3 may be selected according to actual needs. As shown in FIGS. 6 and 7, the above module 3 is provided with a first mounting notch 31, and the first fixing member 1 is fixed at the first mounting notch 31.

In an aspect, the first mounting notch 31 and the first fixing member 1 may fit with each other by positioning. In this way, the positioning effect of the first mounting notch 31 on the first fixing member 1 during installation prevents the first fixing member from being deflected during the fixation, thus facilitating fixing the first fixing member and also improving the fixing efficiency.

In another aspect, the first fixing member 1 may be flush with the modules 3 at which the first fixing member 1 is located, so that the first fixing member 1 does not protrude from the modules 3 after the entire first fixing member 1 is mounted at the modules 3, which effectively improves the appearance and reduces the size of the entire structure.

The above two aspects may be combined or not, depending on actual needs, which are not limited in the embodiment.

In the above structure, if the first fixing member 1 is flush with the modules 3 on which the first fixing member 1 is located and at least one module 3 is provided with a first flange 33 in a circumferential direction, the first flange 33 may have a first flange notch 34. As shown in FIG. 8, the first fixing member 1 includes a first fixing plate 11 and a first protruding portion 12 provided on the first fixing plate 11. The first fixing plate 11 is fixed at the first mounting notch 31 and the first fixing plate 11 is flush with the modules 3 at which the first fixing plate 11 is located. The first protruding portion 12 is located at the first flange notch 34, and the first protruding portion 12 and the first flange 33 at which the first protruding portion 12 is located are flush with each other and abutted to each other to form a closed loop structure.

It should be noted that if the first mounting notch 31 and the first fixing member 1 fit with each other by positioning, the first mounting notch 31 and the first fixing plate 11 fit with each other by positioning.

The number of the first protruding portion 12 in the first fixing member 1 is related to the number of modules 3 across which the first fixing member 1 stretches, which is not limited in this embodiment.

To facilitate fixing, the module 3 may be provided with a first mounting boss 32 at the first mounting notch 31. The first mounting boss 32 is provided with a mounting hole for fixing the first fixing member 1.

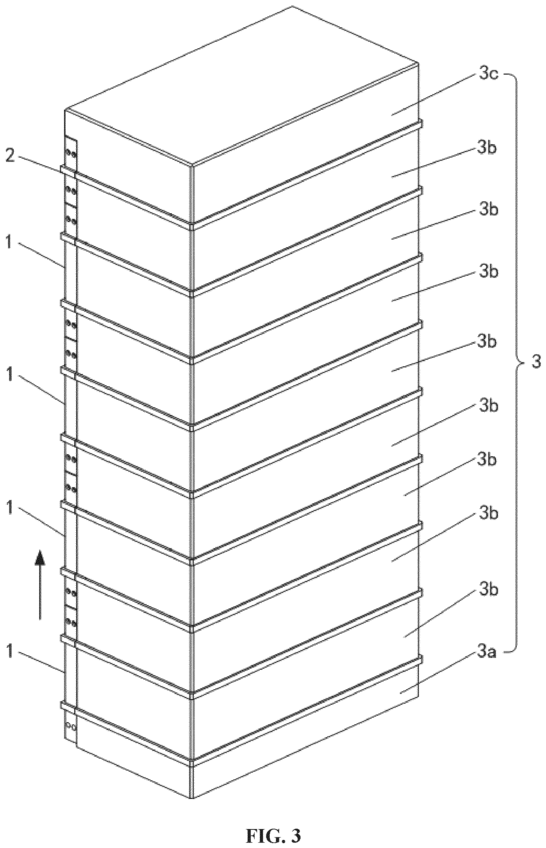

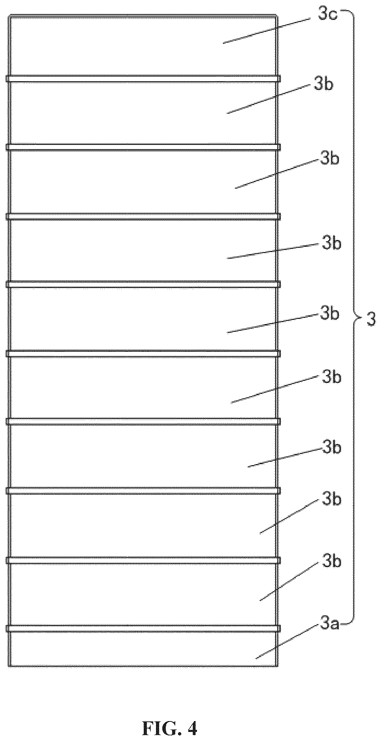

Generally, the module 3 is of a rectangular cuboid shape, the first fixing member 1 may be arranged on an edge of the module 3, as shown in FIGS. 3 to 5. Alternatively, the first fixing member 1 may be arranged between two edges of the module 3.

In the above module fixing structure of a household energy storage system, if after the modules 3 is fixed by using the first fixing member 1, only one module 3 remains unfixed in the stacking direction, and the only one module 3 remained in the stacking direction may be fixed by using a second fixing member 2. Specifically, the second fixing member 2 is fixedly connected to two adjacent modules 3 in the stacking direction. Therefore, based on the above situations, the module fixing structure further includes a second fixing member 2 which is fixedly connected to two adjacent modules 3 in the stacking direction.

To facilitate maintenance of the modules 3, the second fixing member 2 may be fixedly connected to the modules 3 in a detachable manner. Optionally, the second fixing member 2 and the modules 3 are fixedly connected through a threaded connecting member, so that the structure is simple and the fixing is reliable.

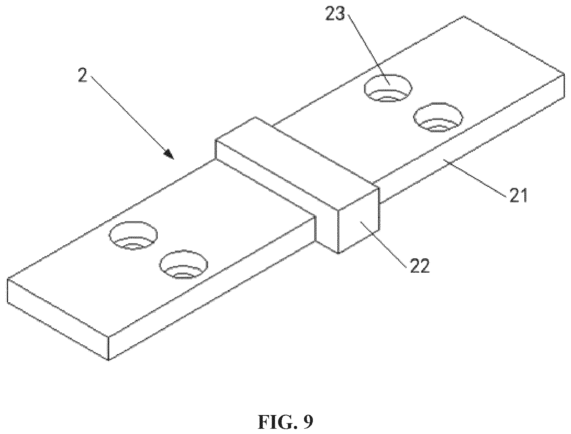

Specifically, the second fixing member 2 and the module 3 are fixedly connected through screws. As shown in FIG. 9, the second fixing member 2 is provided with second fixing holes 23 for the screws to pass through, and each of the second fixing holes 23 is a countersunk hole. In this way, the screws can be hidden and the appearance is improved.

In actual application, the structure for fixing the second fixing member 2 to the modules 3 is not limited to the above manners, and the second fixing member 2 may be fixed to the modules 3 by using one of manners or a combination of at least two of the manners of a binding member, a snap-on structure and a clamping member.

The specific structures of the second fixing member 2 and the modules 3 described above are selected according to actual needs. To facilitate fixing, the module 3 is provided with a second mounting notch, and the second fixing member 2 is fixed at the second mounting notch.

In an aspect, the second mounting notch and the second fixing member 2 may fit with each other by positioning. In this way, the positioning effect of the second mounting notch on the second fixing member 2 during installation prevents the second fixing member 2 from being deflected during the fixation, thus facilitating fixing the second fixing member 2 and also improving the fixing efficiency.

In another aspect, the second fixing member 2 may be flush with the modules 3 at which the second fixing member 2 is located, so that the second fixing member 2 does not protrude from the modules 3 after the entire second fixing member 2 is mounted at the modules 3, which effectively improves the appearance and reduces the size of the entire structure.

The above two aspects may be combined or not, depending on actual needs, which are not limited in the embodiment.

In the above structure, if the second fixing member 1 is flush with the modules 3at which the second fixing member 1 is located and at least one module 3 is provided with a second flange in a circumferential direction, the second flange may have a second flange notch. As shown in FIG. 9, the second fixing member 2 includes a second fixing plate 21 and a second protruding portion 22 provided on the second fixing plate 21. The second fixing plate 21 is fixed at the second mounting notch, and the second fixing plate 21 is flush with the modules 3 at which the second fixing plate 21 is located. The second protruding portion 22 is located at the second flange notch, and the second protruding portion 22 and the second flange at which the second protruding portion 22 is located are flush with each other and abutted to each other to form a closed loop structure.

It should be noted that the second mounting notch, the second flange and the second flange notch are not shown in the attached drawings. The second mounting notch may be referred to the first mounting notch 31, the second flange may be referred to the first flange 33, and the second flange notch may be referred to the first flange notch 34. If the second mounting notch and the second fixing member 2 fit with each other by positioning, the second mounting notch and the second fixing member 21 fit with each other by positioning.

In the second fixing member 2, the second protruding portion 22 is located in a middle of the second fixing member 2, and the second fixing holes 23 are located at two ends of the second fixing member 2.

Generally, the module 3 is of a rectangular cuboid shape, the second fixing member 2 may be arranged on an edge of the module 3 or between two edges of the module 3.

In the module fixing structure according to the above embodiment, the module 3 refers to a functional module that can be included in the household energy storage system or a structural module that can be stacked in the household energy storage system. The functional module may be an energy storage module, a power control module, an inverter module, or a heat dissipation module, and the above structural module may be a base or a top cover, or the like. If the household energy storage system is a light storage and charging system, alternatively, the functional module may be a photovoltaic power generation module.

In an aspect, at least one module 3 may be a functional module and at least two modules 3 may be structural modules, or at least two modules 3 may be functional modules and at least one module 3 may be a structural module.

In another aspect, each of the modules 3 may be a functional module.

In actual application, if there are more structural modules, e.g. three or more structural modules are provided, each of the modules 3 may be a structural module.

It should be noted that in a case that at least two modules 3 are functional modules, the at least two functional modules may be the same or different; and in a case that at least two modules 3 are structural modules, the at least two structural modules may be the same or different.

In order to more specifically illustrate the technical solutions according to the present application, four embodiments are illustrated hereinafter.

### First Embodiment

As shown in FIGS. 2 and 3, a module fixing structure of a household energy storage system according to a first embodiment includes multiple modules 3, at least one first fixing member 1, and at least one second fixing member 2.

The multiple modules 3 are stacked in a vertical direction. The second fixing member 2 is fixedly connected to two topmost modules 3, and the remaining modules 3 are fixedly connected by the first fixing member 1.

Specifically, the first fixing member 1 extends along a vertical direction, the first fixing member 1 stretches across at least one module 3, and only two ends of the first fixing member 1 are fixed to the other two modules 3, respectively.

As shown in FIG. 2, the number of the modules 3 is eight, the number of the first fixing member 1 is three, each of the first fixing member 1 stretches across one module 3, and the number of the second fixing member 2 is one. As shown in FIG. 3, the number of the modules 3 is ten, the number of the first fixing member 1 is four, each of the first fixing member 1 stretches across one module 3, and the number of the second fixing member 2 is one.

In the first embodiment, the position of the second fixing member 2 may be adjusted, for example the second fixing member 2 is fixedly connected to two bottommost modules 3, which is not limited to the positions shown in FIGS. 2 and 3.

The specific types of the modules 3 may be selected according to actual needs. As shown in FIG. 3, in the vertical direction, a module 3 at the bottommost end is a base 3a, a module 3 at the topmost end is a top cover 3c, and modules 3 between the base 3a and the top cover 3c are functional modules 3b.

In practical applications, the modules 3 may have other types and are not limited to the above embodiment.

### Second Embodiment

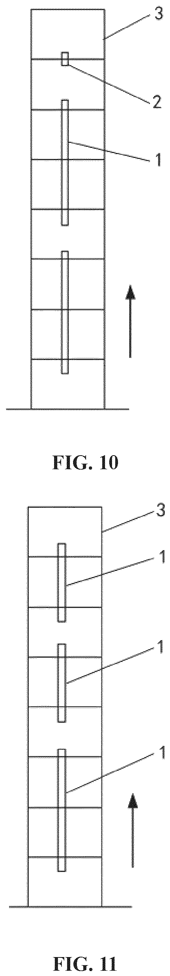

As shown in FIG. 10, the second embodiment differs from the first embodiment mainly in the number of modules 3 across which the first fixing member 1 stretches. Specifically, in the second embodiment, the number of the modules 3 is eight, the first fixing member 1 is two, the number of the second fixing member 2 is one, and each of the first fixing member 1 stretches across two modules 3.

In actual application, the number of the modules 3 across which the first fixing member 1 stretches may be three, or four or more, and is not limited to two.

### Third embodiment

As shown in FIG. 11, the third embodiment differs from the first embodiment mainly in that no second fixing member is provided.

Specifically, a module fixing structure of a household energy storage system according to the third embodiment includes multiple modules 3 and at least two first fixing members 1.

The multiple modules 3 are stacked in a vertical direction, the first fixing member 1 extends along the vertical direction, and the at least two first fixing members 1 are distributed in sequence in the vertical direction.

The first fixing member 1 stretches across at least one of the modules 3, and only two ends of the first fixing member 1 are fixed to two modules 3, respectively.

In the third embodiment, the number of the modules 3 across which each of the at least two first fixing members 1 stretches is different. Specifically, as shown in FIG. 11, the number of the modules 3 is eight, the number of the first fixing member 1 is three, two of the three first fixing members 1 each stretches across one module 3, and the other one of the three first fixing members 1stretches across two modules 3.

In the third embodiment, the number of the modules 3 across which the first fixing member 1 stretches maybe other values, which is not limited to one or two.

### Fourth Embodiment

As shown in FIG. 12, the fourth embodiment differs from the first embodiment mainly in the stacking direction of the modules 3.

A module fixing structure of a household energy storage system according to the fourth embodiment includes multiple modules 3, at least two first fixing members 1, and at least one second fixing member 2.

The modules 3 are stacked both in a vertical direction and in a horizontal direction. In the vertical direction, the second fixing member 2 is fixedly connected to two adjacent modules 3, at least one first fixing member 1 stretches across at least one module 3, and only two ends of the first fixing member 1 are fixedly connected to two modules 3, respectively. In the horizontal direction, at least one first fixing member 1 stretches across at least one module 3, and only two ends of the first fixing member 1 are fixedly connected to two modules 3, respectively.

Specifically, the modules 3 stacked in the vertical direction are referred to as module columns, and the modules 3 stacked in the horizontal direction are referred to as module rows. In the vertical direction, in a module row located in the bottom rows, the modules 3 are fixed by the first fixing member 1 in a stretching-across manner. In each of the module columns, the topmost two modules 3 are fixedly connected by the second fixing member 2, and the other modules 3 are fixed by the first fixing member 1 in a stretching-across manner.

Of course, modules in other module rows 3 may be fixed by the first fixing member 1 in a stretching-across manner according to actual needs, which is not limited to the above embodiments.

In actual application, the horizontal direction may be a width direction of the modules 3, which is not limited to the direction shown in FIG. 12; the modules 3 may be stacked in the vertical direction and in the length direction of the modules 3, and also in the width direction of the modules 3, which is not limited to the two stacking directions shown in FIG. 12.

Based on the module fixing structure according to the above embodiments, a household energy storage system is further provided. The household energy storage system includes the module fixing structure according to the above embodiments.

Since the module fixing structure according to the above embodiments has the technical effects described above, and the household energy storage system includes the module fixing structure of a household energy storage system, the above household energy storage system also has the corresponding technical effects, which will not be repeated herein.

The above description of the disclosed embodiments enables those skilled in the art to implement or use the present application. Various modifications to the embodiments are apparent to those skilled in the art, and general principles defined herein can be implemented in other embodiments without departing from the scope of the present application. Therefore, the present application is not limited to the embodiments described herein, and conforms to the widest scope consistent with the principles and novel features disclosed herein.

## Claims

1. A module fixing structure applicable to a household energy storage system, comprising:
a plurality of modules (3) and at least one first fixing member (1); wherein
the plurality of modules (3) are stacked in at least one stacking direction;
in a stacking direction of the at least one stacking direction in which N modules (3) of the plurality of modules (3) are stacked, the first fixing member (1) stretches across M modules (3) of the plurality of modules (3), only two ends of the first fixing member (1) are fixed to two of the plurality of modules (3), respectively, and the M modules (3) are located between the two ends of the first fixing member (1) and are not fixedly connected to the first fixing member (1); wherein
N is a positive integer greater than or equal to 3, and M is a positive integer less than or equal to N-2.

2. The module fixing structure according to claim 1, wherein
the number of the first fixing member (1) is at least two; and
the at least two first fixing members (1) stretch across a same number of modules (3); and/or, the at least two first fixing members (1) stretch across different numbers of modules (3).

3. The module fixing structure according to claim 1, wherein the stacking direction in which the N modules (3) are stacked is a vertical direction and/or a horizontal direction.

4. The module fixing structure according to claim 3, wherein each of the plurality of modules (3) is of a rectangular cuboid shape, the vertical direction is a height direction of the modules (3), and the horizontal direction is a length direction and/or a width direction of the modules (3).

5. The module fixing structure according to claim 1, wherein two adjacent modules (3) of the plurality of modules (3) fit with each other by positioning in the stacking direction.

6. The module fixing structure according to claim 5, wherein in the stacking direction, one of the two adjacent modules (3) is provided with at least one positioning groove, the other of the two adjacent modules (3) is provided with at least one positioning member, and the positioning member and the positioning groove fit with each other by positioning.

7. The module fixing structure according to claim 6, wherein
the number of the at least one positioning member is two or more, and the number of the at least one positioning groove is two or more; wherein
at least one of the two or more positioning members is a first positioning member (4), at least one of the two or more positioning grooves is a first positioning groove (6), and the first positioning member (4) and the first positioning groove (6) fit with each other by positioning; and
at least another one of the two or more positioning members is a second positioning member (5), at least another one of the two or more positioning grooves is a second positioning groove (7), and the second positioning member (5) and the second positioning groove (7) fit with each other by positioning; and wherein
a fit accuracy between the first positioning member (4) and the first positioning groove (6) is less than that between the second positioning member (5) and the second positioning groove (7).

8. The module fixing structure according to claim 7, wherein
the stacking direction is a vertical direction, the first positioning member (4) is a handle, the first positioning groove (6) is a handle groove, the handle is arranged at a top of the other of the two adjacent modules (3), and the handle groove is arranged at a bottom of the one of the two adjacent modules (3); and
the second positioning member (5) is a positioning rod, and the second positioning groove (7) is a positioning rod groove.

9. The module fixing structure according to claim 1, wherein the first fixing member (1) is fixedly connected to the modules (3) in a detachable manner.

10. The module fixing structure according to claim 1, wherein the module (3) is provided with a first mounting notch (31), the first mounting notch (31) and the first fixing member (1) fit with each other by positioning and/or the first fixing member (1) and the modules (3) at which the first fixing member (1) is located are flush with each other; and the first fixing member (1) is fixed at the first mounting notch (31).

11. The module fixing structure according to claim 10, wherein
in a case that the first fixing member (1) and the modules (3) at which the first fixing member (1) is located are flush with each other, at least one of the modules (3) is provided with a first flange (33) in a circumferential direction, the first flange (33) has a first flange notch (34); and the first fixing member (1) comprises a first fixing plate (11) and a first protruding portion (12) provided on the first fixing plate (11); wherein
the first fixing plate (11) is fixed at the first mounting notch (31), and the first fixing plate (11) and the modules (3) at which the first fixing member (1) is located are flush with each other; the first protruding portion (12) is arranged at the first flange notch (34), and the first protruding portion (12) and the first flange (33) are flush with each other and abutted to each other to form a closed loop structure.

12. The module fixing structure according to claim 1, further comprising a second fixing member (2), wherein the second fixing member (2) is configured to fixedly connect two adjacent modules (3) of the plurality of modules (3) in the stacking direction.

13. The module fixing structure according to claim 12, wherein each of the two adjacent modules (3) of the plurality of the modules (3) is provided with a second mounting notch, the second mounting notch and the second fixing member (2) fit with each other by positioning, and/or the second fixing member (2) and the two adjacent modules (3) to which the second fixing member (2) is connected are flush with each other; and the second fixing member (2) is fixed at the second mounting notch.

14. The module fixing structure according to claim 13, wherein
in a case that the second fixing member (2) and the two adjacent modules (3) to which the second fixing member (2) is connected are flush with each other, at least one of the two adjacent modules (3) is provided with a second flange in a circumferential direction, the second flange has a second flange notch; and the second fixing member (2) comprises a second fixing plate and a second protruding portion provided on the second fixing plate;
wherein the second fixing plate is fixed at the second mounting notch, and the second fixing plate and the two adjacent modules (3) to which the second fixing plate is connected are flush with each other; the second protruding portion is arranged at the second flange notch, and the second protruding portion and the second flange at which the second protruding portion is arranged are flush with each other and abutted to each other to form a closed loop structure.

15. The module fixing structure according to any one of claims 1 to 14, wherein
at least two of the modules (3) are functional modules and at least one of the modules (3) is a structural module; or, at least one of the modules (3) is a functional module and at least two of the modules (3) are structural modules; or, each of the modules (3) is a functional module; and wherein
the functional module is an energy storage module, a power control module, an inverter module, a photovoltaic power generation module or a heat dissipation module, and the structural module is a base or a top cover.

16. A household energy storage system, comprising the module fixing structure according to any one of claims 1 to 15.

## Patentansprüche

1. Modulbefestigungsstruktur, die auf ein Haushaltsenergiespeichersystem anwendbar ist, umfassend:
eine Vielzahl von Modulen (3) und mindestens ein erstes Befestigungselement (1); wobei
die Vielzahl von Modulen (3) in mindestens einer Stapelrichtung gestapelt ist;
in einer Stapelrichtung der mindestens einen Stapelrichtung, in der N Module (3) der Vielzahl von Modulen (3) gestapelt sind, sich das erste Befestigungselement (1) über M Module (3) der Vielzahl von Modulen (3) erstreckt, lediglich zwei Enden des ersten Befestigungselements (1) jeweils an zwei der Vielzahl von Modulen (3) befestigt sind und sich die M Module (3) zwischen den zwei Enden des ersten Befestigungselements (1) befinden und nicht fest mit dem ersten Befestigungselement (1) verbunden sind; wobei
N eine positive ganze Zahl größer oder gleich 3 ist und M eine positive ganze Zahl kleiner oder gleich N-2 ist.

2. Modulbefestigungsstruktur nach Anspruch 1, wobei
die Anzahl des ersten Befestigungselements (1) mindestens zwei beträgt; und
sich die mindestens zwei ersten Befestigungselemente (1) über eine gleiche Anzahl von Modulen (3) erstrecken; und/oder sich die mindestens zwei ersten Befestigungselemente (1) über unterschiedliche Anzahlen von Modulen (3) erstrecken.

3. Modulbefestigungsstruktur nach Anspruch 1, wobei die Stapelrichtung, in der die N Module (3) gestapelt sind, eine vertikale Richtung und/oder eine horizontale Richtung ist.

4. Modulbefestigungsstruktur nach Anspruch 3, wobei jedes der Vielzahl von Modulen (3) eine rechteckige Quaderform aufweist, die vertikale Richtung eine Höhenrichtung der Module (3) ist und die horizontale Richtung eine Längenrichtung und/oder eine Breitenrichtung der Module (3) ist.

5. Modulbefestigungsstruktur nach Anspruch 1, wobei zwei benachbarte Module (3) der Vielzahl von Modulen (3) durch Positionieren in der Stapelrichtung ineinander passen.

6. Modulbefestigungsstruktur nach Anspruch 5, wobei in der Stapelrichtung eines der zwei benachbarten Module (3) mit mindestens einer Positionierungsnut bereitgestellt ist, das andere der zwei benachbarten Module (3) mit mindestens einem Positionierungselement bereitgestellt ist und das Positionierungselement und die Positionierungsnut durch Positionieren ineinander passen.

7. Modulbefestigungsstruktur nach Anspruch 6, wobei
die Anzahl des mindestens einen Positionierungselements zwei oder mehr beträgt und die Anzahl der mindestens einen Positionierungsnut zwei oder mehr beträgt; wobei
mindestens eines der zwei oder mehr Positionierungselemente ein erstes Positionierungselement (4) ist, mindestens eine der zwei oder mehr Positionierungsnuten eine erste Positionierungsnut (6) ist und das erste Positionierungselement (4) und die erste Positionierungsnut (6) durch Positionieren ineinander passen; und
mindestens ein anderes der zwei oder mehr Positionierungselemente ein zweites Positionierungselement (5) ist, mindestens eine andere der zwei oder mehr Positionierungsnuten eine zweite Positionierungsnut (7) ist und das zweite Positionierungselement (5) und die zweite Positionierungsnut (7) durch Positionieren ineinander passen; und wobei
eine Passgenauigkeit zwischen dem ersten Positionierungselement (4) und der ersten Positionierungsnut (6) kleiner als diejenige zwischen dem zweiten Positionierungselement (5) und der zweiten Positionierungsnut (7) ist.

8. Modulbefestigungsstruktur nach Anspruch 7, wobei
die Stapelrichtung eine vertikale Richtung ist, das erste Positionierungselement (4) ein Griff ist, die erste Positionierungsnut (6) eine Griffnut ist, der Griff oben an dem anderen der zwei benachbarten Module (3) angeordnet ist und die Griffnut unten an dem einen der zwei benachbarten Module (3) angeordnet ist; und
das zweite Positionierungselement (5) eine Positionierungsstange ist und die zweite Positionierungsnut (7) eine Positionierungsstangennut ist.

9. Modulbefestigungsstruktur nach Anspruch 1, wobei das erste Befestigungselement (1) auf eine abnehmbare Weise fest mit den Modulen (3) verbunden ist.

10. Modulbefestigungsstruktur nach Anspruch 1, wobei das Modul (3) mit einer ersten Montagekerbe (31) bereitgestellt ist, wobei die erste Montagekerbe (31) und das erste Befestigungselement (1) durch Positionieren ineinander passen und/oder das erste Befestigungselement (1) und die Module (3), an denen sich das erste Befestigungselement (1) befindet, miteinander bündig sind; und das erste Befestigungselement (1) an der ersten Montagekerbe (31) befestigt ist.

11. Modulbefestigungsstruktur nach Anspruch 10, wobei
in einem Fall, in dem das erste Befestigungselement (1) und die Module (3), an denen sich das erste Befestigungselement (1) befindet, bündig miteinander sind, mindestens eines der Module (3) mit einem ersten Flansch (33) in einer Umfangsrichtung bereitgestellt ist, der erste Flansch (33) eine erste Flanschkerbe (34) aufweist; und das erste Befestigungselement (1) eine erste Befestigungsplatte (11) und einen ersten vorstehenden Abschnitt (12) umfasst, der an der ersten Befestigungsplatte (11) bereitgestellt ist; wobei
die erste Befestigungsplatte (11) an der ersten Montagekerbe (31) befestigt ist und die erste Befestigungsplatte (11) und die Module (3), an denen sich das erste Befestigungselement (1) befindet, bündig miteinander sind; der erste vorstehende Abschnitt (12) an der ersten Flanschkerbe (34) angeordnet ist und der erste vorstehende Abschnitt (12) und der erste Flansch (33) bündig miteinander sind und aneinander anliegen, um eine geschlossene Schleifenstruktur zu bilden.

12. Modulbefestigungsstruktur nach Anspruch 1, ferner umfassend ein zweites Befestigungselement (2), wobei das zweite Befestigungselement (2) dazu konfiguriert ist, zwei benachbarte Module (3) der Vielzahl von Modulen (3) in der Stapelrichtung fest zu verbinden.

13. Modulbefestigungsstruktur nach Anspruch 12, wobei jedes der zwei benachbarten Module (3) der Vielzahl der Module (3) mit einer zweiten Montagekerbe bereitgestellt ist, die zweite Montagekerbe und das zweite Befestigungselement (2) durch Positionieren ineinander passen und/oder das zweite Befestigungselement (2) und die zwei benachbarten Module (3), mit denen das zweite Befestigungselement (2) verbunden ist, miteinander bündig sind; und das zweite Befestigungselement (2) an der zweiten Montagekerbe befestigt ist.

14. Modulbefestigungsstruktur nach Anspruch 13, wobei
in einem Fall, in dem das zweite Befestigungselement (2) und die zwei benachbarten Module (3), mit denen das zweite Befestigungselement (2) verbunden ist, miteinander bündig sind, mindestens eines der zwei benachbarten Module (3) mit einem zweiten Flansch in einer Umfangsrichtung bereitgestellt ist, der zweite Flansch eine zweite Flanschkerbe aufweist; und das zweite Befestigungselement (2) eine zweite Befestigungsplatte und einen zweiten vorstehenden Abschnitt umfasst, der an der zweiten Befestigungsplatte bereitgestellt ist;
wobei die zweite Befestigungsplatte an der zweiten Montagekerbe befestigt ist und die zweite Befestigungsplatte und die zwei benachbarten Module (3), mit denen die zweite Befestigungsplatte verbunden ist, miteinander bündig sind; der zweite vorstehende Abschnitt an der zweiten Flanschkerbe angeordnet ist und der zweite vorstehende Abschnitt und der zweite Flansch, an dem der zweite vorstehende Abschnitt angeordnet ist, bündig miteinander sind und aneinander anliegen, um eine geschlossene Schleifenstruktur zu bilden.

15. Modulbefestigungsstruktur nach einem der Ansprüche 1 bis 14, wobei
mindestens zwei der Module (3) Funktionsmodule sind und mindestens eines der Module (3) ein Strukturmodul ist; oder mindestens eines der Module (3) ein Funktionsmodul ist und mindestens zwei der Module (3) Strukturmodule sind; oder jedes der Module (3) ein Funktionsmodul ist; und wobei
das Funktionsmodul ein Energiespeichermodul, ein Leistungssteuermodul, ein Wechselrichtermodul, ein Fotovoltaik-Leistungserzeugungsmodul oder ein Wärmeableitungsmodul ist und das Strukturmodul eine Basis oder eine obere Abdeckung ist.

16. Haushaltsenergiespeichersystem, umfassend die Modulbefestigungsstruktur nach einem der Ansprüche 1 bis 15.

## Revendications

1. Structure de fixation de module applicable à un système de stockage d'énergie domestique, comprenant :
une pluralité de modules (3) et au moins un premier élément de fixation (1) ; dans laquelle
la pluralité de modules (3) sont empilés dans au moins une direction d'empilement ;
dans une direction d'empilement de l'au moins une direction d'empilement dans laquelle N modules (3) de la pluralité de modules (3) sont empilés, le premier élément de fixation (1) s'étend sur M modules (3) de la pluralité de modules (3), seules deux extrémités du premier élément de fixation (1) sont fixées à deux modules parmi la pluralité de modules (3), respectivement, et les M modules (3) sont situés entre les deux extrémités du premier élément de fixation (1) et ne sont pas reliés de manière fixe au premier élément de fixation (1) ; dans laquelle
N est un entier positif supérieur ou égal à 3, et M est un entier positif inférieur ou égal à N-2.

2. Structure de fixation de module selon la revendication 1, dans laquelle
le nombre du premier élément de fixation (1) est d'au moins deux ; et
les au moins deux premiers éléments de fixation (1) s'étendent sur un même nombre de modules (3) ; et/ou, les au moins deux premiers éléments de fixation (1) s'étendent sur un nombre différent de modules (3).

3. Structure de fixation de module selon la revendication 1, dans laquelle la direction d'empilement dans laquelle les N modules (3) sont empilés est une direction verticale et/ou une direction horizontale.

4. Structure de fixation de module selon la revendication 3, dans laquelle chacun de la pluralité de modules (3) est de forme cuboïde rectangulaire, la direction verticale est une direction de hauteur des modules (3), et la direction horizontale est une direction de longueur et/ou une direction de largeur des modules (3).

5. Structure de fixation de module selon la revendication 1, dans laquelle deux modules adjacents (3) parmi la pluralité de modules (3) s'ajustent l'un à l'autre par positionnement dans la direction d'empilement.

6. Structure de fixation de module selon la revendication 5, dans laquelle, dans la direction d'empilement, un module parmi les deux modules adjacents (3) est pourvu d'au moins une rainure de positionnement, l'autre module parmi les deux modules adjacents (3) est pourvu d'au moins un élément de positionnement, et l'élément de positionnement et la rainure de positionnement s'ajustent l'un à l'autre par positionnement.

7. Structure de fixation de module selon la revendication 6, dans laquelle
le nombre d'au moins un élément de positionnement est de deux ou plus, et le nombre d'au moins une rainure de positionnement est de deux ou plus ; dans laquelle
au moins un élément parmi les deux ou plusieurs éléments de positionnement est un premier élément de positionnement (4), au moins une rainure parmi les deux ou plusieurs rainures de positionnement est une première rainure de positionnement (6), et le premier élément de positionnement (4) et la première rainure de positionnement (6) s'ajustent l'un à l'autre par positionnement ; et
au moins un autre élément parmi les deux ou plusieurs éléments de positionnement est un second élément de positionnement (5), au moins une autre rainure parmi les deux ou plusieurs rainures de positionnement est une seconde rainure de positionnement (7), et le second élément de positionnement (5) et la seconde rainure de positionnement (7) s'ajustent l'un à l'autre par positionnement ; et dans laquelle
une précision d'ajustement entre le premier élément de positionnement (4) et la première rainure de positionnement (6) est inférieure à celle entre le second élément de positionnement (5) et la seconde rainure de positionnement (7).

8. Structure de fixation de module selon la revendication 7, dans laquelle
la direction d'empilement est une direction verticale, le premier élément de positionnement (4) est une poignée, la première rainure de positionnement (6) est une rainure de poignée, la poignée est agencée à une partie supérieure de l'autre module parmi les deux modules adjacents (3), et la rainure de poignée est agencée à une partie inférieure de l'un parmi les deux modules adjacents (3) ; et
le second élément de positionnement (5) est une tige de positionnement, et la seconde rainure de positionnement (7) est une rainure de tige de positionnement.

9. Structure de fixation de module selon la revendication 1, dans laquelle le premier élément de fixation (1) est relié de manière fixe aux modules (3) de manière détachable.

10. Structure de fixation de module selon la revendication 1, dans laquelle le module (3) est pourvu d'une première encoche de montage (31), la première encoche de montage (31) et le premier élément de fixation (1) s'ajustent l'un à l'autre par positionnement et/ou le premier élément de fixation (1) et les modules (3) au niveau desquels le premier élément de fixation (1) est situé sont au même niveau les uns avec les autres ; et le premier élément de fixation (1) est fixé au niveau de la première encoche de montage (31).

11. Structure de fixation de module selon la revendication 10, dans laquelle,
dans le cas où le premier élément de fixation (1) et les modules (3) au niveau desquels le premier élément de fixation (1) est situé sont au même niveau les uns avec les autres, au moins un module parmi les modules (3) est pourvu d'une première bride (33) dans une direction circonférentielle, la première bride (33) a une première encoche de bride (34) ; et le premier élément de fixation (1) comprend une première plaque de fixation (11) et une première partie en saillie (12) prévue sur la première plaque de fixation (11) ; dans laquelle
la première plaque de fixation (11) est fixée au niveau de la première encoche de montage (31), et la première plaque de fixation (11) et les modules (3) au niveau desquels le premier élément de fixation (1) est situé sont au même niveau les uns avec les autres ; la première partie en saillie (12) est agencée au niveau de la première encoche de bride (34), et la première partie en saillie (12) et la première bride (33) sont au même niveau l'une avec l'autre et en butée l'une contre l'autre pour former une structure en boucle fermée.

12. Structure de fixation de module selon la revendication 1, comprenant en outre un second élément de fixation (2), dans laquelle le second élément de fixation (2) est configuré pour relier de manière fixe deux modules adjacents (3) parmi la pluralité de modules (3) dans la direction d'empilement.

13. Structure de fixation de module selon la revendication 12, dans laquelle chacun des deux modules adjacents (3) de la pluralité des modules (3) est pourvu d'une seconde encoche de montage, la seconde encoche de montage et le second élément de fixation (2) s'ajustent l'un à l'autre par positionnement, et/ou le second élément de fixation (2) et les deux modules adjacents (3) auxquels le second élément de fixation (2) est relié sont au même niveau les uns avec les autre ; et le second élément de fixation (2) est fixé au niveau de la seconde encoche de montage.

14. Structure de fixation de module selon la revendication 13, dans laquelle,
dans le cas où le second élément de fixation (2) et les deux modules adjacents (3) auxquels le second élément de fixation (2) est relié sont au même niveau les uns avec les autres, au moins un module parmi les deux modules adjacents (3) est pourvu d'une seconde bride dans une direction circonférentielle, la seconde bride a une seconde encoche de bride ; et le second élément de fixation (2) comprend une seconde plaque de fixation et une seconde partie en saillie prévue sur la seconde plaque de fixation ;
dans laquelle la seconde plaque de fixation est fixée au niveau de la seconde encoche de montage, et la seconde plaque de fixation et les deux modules adjacents (3) auxquels la seconde plaque de fixation est reliée sont au même niveau les uns avec les autres ; la seconde partie en saillie est agencée au niveau de la seconde encoche de bride, et la seconde partie en saillie et la seconde bride au niveau de laquelle la seconde partie en saillie est agencée sont au même niveau l'une avec l'autre et en butée l'une contre l'autre pour former une structure en boucle fermée.

15. Structure de fixation de module selon l'une quelconque des revendications 1 à 14, dans laquelle
au moins deux modules parmi les modules (3) sont des modules fonctionnels et au moins un module parmi les modules (3) est un module structurel ; ou, au moins un module parmi les modules (3) est un module fonctionnel et au moins deux modules parmi les modules (3) sont des modules structurels ; ou, chacun des modules (3) est un module fonctionnel ; et dans laquelle
le module fonctionnel est un module de stockage d'énergie, un module de commande de puissance, un module onduleur, un module de production d'énergie photovoltaïque ou un module de dissipation de chaleur, et le module structurel est une base ou un couvercle supérieur.

16. Système de stockage d'énergie domestique, comprenant la structure de fixation de module selon l'une quelconque des revendications 1 à 15.
